# EUROPÄISCHE PATENTSCHRIFT

(11) **EP 2 976 202 B1**
(45) Veröffentlichungstag und Bekanntmachung des Hinweises auf die Patenterteilung: **06.05.2020**
(21) Anmeldenummer: 14710307.1
(22) Anmeldetag: 17.03.2014
(51) Int. Cl.: B29C 45/14, B29C 33/00, B29C 45/27

(54) **SCHMELZELEITSYSTEM MIT FILMANGUSS FÜR IN-MOLD-DECORATION (IMD)- ODER IN-MOLD-LABELING (IML)-VERFAHREN ZUM SPRITZGIESSEN**
RUNNER WITH FILM GATE FOR IN-MOLD-DECORATION (IMD)- OR IN-MOLD-LABELING (IML) INJECTION MOLDING PROCESSES
CANAL D'ALIMENTATION AVEC INJECTION EN VOILE POUR IN-MOLD-DECORATION (IMD)- OR IN-MOLD-LABELING (IML) EN MOULAGE PAR INJECTION

(30) Priorität: 22.03.2013 DE 102013205141
(43) Veröffentlichungstag der Anmeldung: 27.01.2016
(73) Patentinhaber: BSH Hausgeräte GmbH, 81739 München (DE)
(72) Erfinder: WYBRANIETZ, Gino, 14612 Falkensee (DE)
(86) Internationale Anmeldenummer: PCT/EP2014/055254
(87) Internationale Veröffentlichungsnummer: WO 2014/147008

(56) Entgegenhaltungen:
- EP-A1- 0 552 040
- DE-A1-102004 041 833
- DE-A1-102010 016 350
- DE-B- 1 269 328
- JP-A- H0 740 391
- JP-A- S6 140 129
- US-A- 4 252 294
- US-A- 4 645 446
- US-A- 5 220 863
- US-A- 5 955 021
- US-A1- 2002 190 430
- US-A1- 2004 258 924
- US-A1- 2011 268 923

## Beschreibung

Die Erfindung betrifft ein Schmelzeleitsystem für In-Mold-Decoration (IMD)- oder In-Mold-Labeling (IML)-Verfahren zum Spritzgießen von flachen Kunststoffteilen, mit wenigstens einer Band- oder Filmanbindung und einem Angussverteiler, sowie ein Verfahren unter Verwendung eines solchen Schmelzeleitsystems.

Für die Herstellung von flachen Kunststoffbauteilen mit integrierten Dekorschichten oder Folien haben sich In-Mold-Decoration (IMD)- oder In-Mold-Labeling (IML)-Spritzgießverfahren bewährt. Die Verbindung einer Folie (IML) oder Dekorschicht (IMD) zum Kunststoffbauteil (beispielsweise ein Anzeigefenster bzw. Displayfenster) erfolgt durch Anspritzen des Kunststoffs an eine mit einem Haftvermittler beschichtete Folie (IML) oder eine Trägerfolie (IMD), Beim In-Mold Labeling Verfahren (IML) wird die Formteiloberfläche des Spritzgießwerkzeugs mit einer bedruckten oder dekorierten Folie versehen und anschließend mit Kunststoff hinterspritzt. Mit dem In-Mold Decoration Verfahren (IMD) wird ein Dekor mit Hilfe einer Trägerfolie durch Druck und Temperatur der Kunststoffschmelze auf das Kunststoffbauteil übertragen. Die Trägerfolie wird dabei nicht mit dem Kunststoffbauteil verbunden, sondern nur das auf der Trägerfolie befindliche Dekor übertragen.

Die beste Verschmelzung erreicht man beim Hinterspritzen mit einer vom Lackhersteller empfohlenen Verarbeitungstemperatur. Die Haftung der Folie oder der Dekorschichten zum Substrat/Kunststoffbauteil wird durch Haftvermittler realisiert. Eine gute Verbundhaftung wird außerdem durch einen engen Verarbeitungszeitraum zwischen Drucken, Trocknen und Hinterspritzen erzielt. Haftvermittler weisen zumeist eine hohe Temperaturbeständigkeit im Verarbeitungsfenster vom Kunststoff aus, können aber empfindlich auf hohe Scherkräfte und Schergeschwindigkeiten, gerade nahe dem Angussbereich, reagieren.

Die Schergeschwindigkeit ist ein Maß für die relative Geschwindigkeit der Materialschichten, die durch einen Strömungskanal fließen. Hohe Schergeschwindigkeiten erzeugen hohe Scherkräfte, welche zu Auswaschungen des Haftvermittlers führen können und damit eine unzureichende Haftung zwischen dem Kunststoffbauteil und der Folie und oder dem Dekor zur Folge haben. Scherkräfte und Schergeschwindigkeiten entstehen, wenn die Kunststoffschmelze durch ein Werkzeug fließt. Dabei entsteht Wärme, die das Ergebnis der Scherung ist. Angusskanäle mit einem kleinen Querschnitt rufen eine erhöhte Reibungswärme des Materials während der Füllung der Kavität in einem Spritzgießwerkzeug hervor. Daher dürfen die Angusskanäle nicht zu eng sein. Andererseits erhöhen zu weite Angusskanäle aber die Zykluszeit und den Materialverlust im Anguss.

Für flächige Formteile wie beispielsweise Displayanzeigen und Anzeigefenster werden am Bauteil Film- bzw. Bandanangusssysteme vorgesehen. Diese können fächerförmig/trapezförmig ausgelegt sein und werden in dem Schmelzeleitsystem von einem Angussverteiler gebildet. Der Angussverteiler kann dick sein und mündet direkt in eine Anbindung, welche am Bauteil den Anschnitt ausbildet.

Bei dickwandigen Teilen, welche aus konstruktiven und/oder designrelevanten Gründen über eine dünnere Wand angespritzt werden (wie beispielsweise bei Displayanzeigen für Waschgeräte) weisen die konventionellen Angusssysteme ihre Grenzen auf Insbesondere bei Blenden für Anzeige- und Bedienelemente finden mehr oder weniger transparente Kunststoffe zur Anwendung. Dabei kommt es auf eine gute optische Qualität des fertigen Erzeugnisses an, damit beispielsweise abgedeckte Anzeigeelemente gut erkennbar sind. Schlieren und Markierungen, welche insbesondere die Transparenz beinträchtigen oder optisch verzerrend wirken, sind unerwünscht und führen zum Ausschuss des Erzeugnisses. In der Regel sind auch Angusssysteme in der sichtbaren Fläche des Bauteils zu vermeiden, so dass die Angüsse am Rand des Bauteils angeordnet werden.

Dabei besteht das Problem, dass der Randbereich der flachen Bauteile meist dünn ausläuft und daher in der Gestaltung des Spritzwerkzeugs nur ein Schmelzeleitsystem mit einer sehr schmalen Anbindung zulässt,

Aus der US 2004/258924 A1 ist ein Spritzgiessverfahren für In-moid-decoration bzw. beim In-mold-Iabeling von dekorierten transparenten Filmen bekannt. Zum Schutz des Dekorationsdrucks vor Hitze und Scherkräften ist ein thermoplastischer Deckfilm vorgesehen.

Die DE 10 2004 041833 A1 befaßt sich mit dem Einspritzen eines Dekorelements in einen transparenten Spritzgußartikel, bei dem eine hohe optische Qualität angestrebt wird. Darin wirr bei Spritzgiessverfahren für In-mold-decoration bzw. beim In-mold-Iabeling von u.a. Haushaltsgeräten ein Anguss in Film- oder Bandform eingesetzt.

DE 12 69 328 B befaßt sich mit dem Entfernen eines Angußes aus dem Kanalsystem nachdem die Schmelze erstarrt ist. Dazu ist das Kanalsystem aus zwei gegeneinander verschiebbaren Backen gebildet. Die unsymmetrische Gestaltung des quer zur Einspritzrichtung ausgebildeten Verteilkanals ist führt zu einer einfacheren Herstellung der Spritzgießform.

Die JP S 61 40129 A beschäftigt sich mit der Herstellung von Gummi-Dichtringen.

Die US 4 252 294 A zeigt ein Verfahren zum Spritzen von flachen, transluzenten oder transparenten Kunststoffteilen wie Linsen und Prismen, die eine gute optische Eigenschaften durch homogene und isotrope Guß-Qualität bedingen. Hier wird ein homogener Schmelzefluß durch eine weitere Verengung des Querschnitts mittels eines zweiten sog. Gates erreicht.

Die US 5 220 863 A betrifft die Herstellung von Membranen durch Spritzen eines nichttransparenten, elastischen Materials.

Die JP H07 40391 A zeigt ein Angußsystem mit einem fächerförmig aufgespreizten Schnielzeleitkanal mit gleichförmigem, zur Anbindung hin sich verengendem Querschnitt.

Die EP 0 552 040 A1 offenbart das Spritzen von Lautsprechermembranen, insbesondere der elastischen Sicke zwischen Membrankegel und Korbrand.

Die US 5 955 021 A zeigt die Herstellung von mit elektronischen Schaltungen versehenen Kunststoff-Karten, wie Kredit- oder Telefonkarten, insbesondere durch Einspritzen elektronischen Schaltung in eine Spritzmasse zwischen zwei Lagen einer Kunststoffolie.

Die US 2011/268923 A1 zeigt die Herstellung eines Maschinenlagers aus einem elastischen Material. Die technische Lehre dieser Druckschrift zielt auf die Vermeidung einer Naht, welche die Stabilität der elastischen Struktur beeinträchtigt.

Die DE 10 2010 016350 A1 zeigt die Herstellung von flächigen Kunststoff-Formteilen durch das Hinterspritzen von Dekorfolien mittels einer Spritzprägetechnik, bei der der Filmanguss aufgrund einer Bewegung der Formplattenabgeschert wird.

US 4 645 446 A offenbart eine Spritzgießform mit einem Ausstoßmechanismus und einer verbesserten Einrichtung zum schnellen Werkzeugwechsel,

Die Veröffentlichung "Designlösungen mit gesteigerter Funktionalität", (Prof. Dr. F. EHRIG; Prof. Dr. G. SCHUSTER: 06/201 1, Swiss Plastics; Aarau: AZ Fachverlage AG, S. 16-17) zeigt die Anwendung von IMD Technologie zur Herstellung von Formteilen aus Kunststoff.

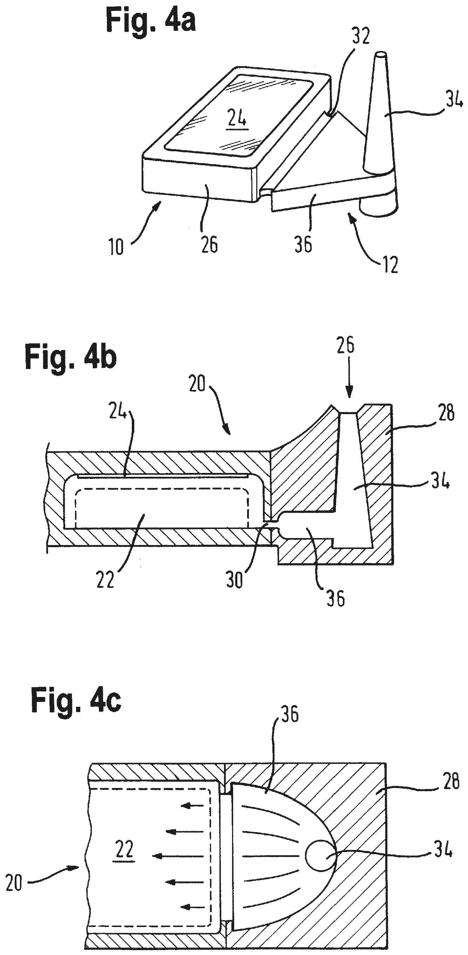

In Figur 4a ist in einer Ansicht ein nach einem herkömmlichen Verfahren hergestelltes flaches Bauteil 10 gezeigt. Das Bauteil 10 besteht aus einer Folie 24, die mit einem Kunststoffmaterial 26 hinterspritzt ist. An dem Bauteil 10 angebunden befindet sich noch ein Anguss 12 aus dem Spritzgieß - Herstellungsprozess,

Figuren 4b und 4c zeigen einen schematischen Längs- bzw. Querschnitt durch ein entsprechendes Spritzgieß-Werkzeug 20 mit einem Schmelzleitsystem 28. In eine Kavität 22 ist eine Folie 24 eingelegt, die mit dem Kunststoffmaterial 26 hinterspritzt wird. Das Schmelzeleitsystem 28 weist einen Angusskegel 34 und einen Angussverteiler 36 auf über welche die Kunststoffschmelze zugeführt wird. Zwischen dem Angussverteiler 36 und der Kavität 22 ist als Anbindung 30 ein quer zur Fließrichtung der Schmelze langgestreckter schlitzförmiger Durchgang vorgesehen. Das in dieser Anbindung erstarrte Material bildet am Bauteil 10 den Anschnitt 32 des Angusses 12, der zur Fertigstellung des Bauteils 10 durchtrennt werden muss.

Der fächerförmige Angussverteiler 36 weist einen quer zur Fließrichtung des Schmelzestroms langgestreckten Querschnitt auf, der parallel zu einer von dem Bauteil 10 gebildeten Ebene ausgerichtet ist. Die Kavität 22 wird in ihrem gesamten oder einem Teil-Querschnitt über die Anbindung 30 von dem Angussverteiler 36 gespeist, wie es in Figur 4c durch die Strömungspfeile angedeutet ist.

Ein derartiges Verfahren und Werkzeug ist beispielsweise aus einer Veröffentlichung des Fraunhofer IWM (Peter Stache, Sven Wüstenhagen; Halle, 06.05.2009; http://www.desiantransfair.de/_files/seminare/09-06/spritzguss.pdf) bekannt.

Bei der Verwendung derartiger Schmelzeleitsysteme tritt das Problem auf, dass im Bereich der Anbindung 30 oder kurz dahinter, aufgrund unzureichender Balancierung die Kunststoffmasse stellenweise zu früh erstarrt, so dass der Einströmquerschnitt der Anbindung 30 verringert ist und die Schmelze nicht gleichmäßig über die gesamte Breite in die Kavität 22 fließen kann. Der Anschnitt 32 friert teilweise oder komplett zu früh ein und versiegelt damit einen Teilquerschnitt bzw. Gesamtquerschnitt der Anbindung 30. Ein erhöhter Nachdruck kann dann die Volumenkontraktion des Spritzgießteils nicht wirksam ausgleichen.

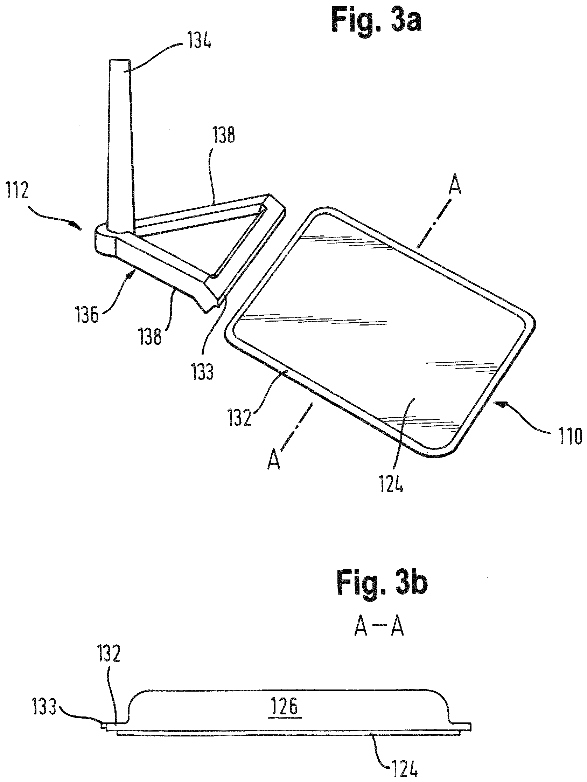

Dünnwandige Spritzgießteile benötigen außerdem eine sehr schnelle Einspritzgeschwindigkeit und hohe Spritzdrücke um vollstandig gefüllt zu werden. Scherkräfte und Schergeschwindigkeiten nehmen zu, da der dünne Fließwegbereich durch das Angusssystem bis in den Flansch (nach Fig. 3b) oder in das gesamte Kunststoffbauteil hinein verlängert wird. Die dabei entstehenden Schwergeschwindigkeiten sind sehr hoch. Hohe Schergeschwindigkeiten haben u.a. Schlierenbildung zur Folge.

Des Weiteren kann es trotz der breiten Anbindung 30 über den Anschnitt 32 zu Freistrahlbildung kommen. Dies hat im fertigen Bauteil 10 unansehnliche Markierungen zur Folge, die das Bauteil unbrauchbar machen. Darüber hinaus scheinen in diesen Bereichen hohe Scherkräfte aufzutreten, die dazu führen können, dass eine Haftvermittlerschicht zwischen Kunststoffmaterial und Folie oder Dekors und Strukturen auf der Folie, insbesondere Elektrodenstrukturen für berührungssensitive Blenden beeinträchtigt werden.

Die Erfindung schafft ein Schmelzeleitsystem der eingangs genannten Art mit einem verbesserten Einspritzverhalten.

Dazu ist ein Schmelzeleitsystem mit den Merkmalen des Anspruchs 1 vorgesehen Demgemäß weist das Schmelzeteitsystem zwischen der Anbindung und dem Angussverteiler eine Staukammer mit einem gegenüber dem Angussverteiler quer zur Fließrichtung des Spritzmaterials erweiterten, asymmetrischen Querschnitt auf.

Durch die Staukammer wird ein Freistrahl, welcher zu Oberflachenfehlern führt, besser verhindert Des Weiteren wird das zu hinterspritzende Dekor oder die Folie durch den entstehenden Fließfrontverlauf indirekt angespritzt. Dies ist besonders schonend für auf der Folie befindliche Haftvermittler-, Lack und/oder Sensorschichten. Der in die Staukammer fließende Kunststoff setzt sich an die Außenwand der Staukammer an und friert ein. Der Weg der Schmelze bleibt durch die selbstisolierende Wirkung des Kunststoffs als thermischer Isolator gegenüber dem Werkzeug länger offen. Im Gegensatz zu konventionellen Gestaltungen kann der Nachdruck länger wirksam bleiben. Schergeschwindigkeiten und Scherkräfte werden durch das größere Volumen der Staukammer reduziert. Des Weiteren wird der Schmelzestrom in der Staukammer vergleichmäßigt und kann sich langsam und laminar in der Kavität ausbreiten.

Erfindungsgemäß weist die Staukammer quer zur Fließrichtung der Schmelze einen asymmetrischen Querschnitt auf. Dies verhindert, dass sich die erstarrende Schmelze in der Staukammer gleichmäßig anlagert, so dass der Schmelzstrom in jedem Fall umgelenkt wird. Dadurch wird der Schmelzstrom zusätzlich abgebremst und verhindert, dass die Schmelze direkt aus dem Verteilkanal, im Freistrahl, in die Kavität einspritzen kann. Letzendlich bildet sich durch die Umlenkung auch eine Vorzugsorientierung für die Schmelze aus und trägt zu einer besseren, gleichmäßigeren Verteilung der Schmelze bei.

Bevorzugt weist die Staukammer quer zur Fließrichtung der Schmelze einen im Wesentlichen prismatischen, insbesondere rechteckigen Querschnitt auf. Die besondere Geometrie der Staukammer insbesondere die Ecken in der Kontur der Staukammer begünstigen das Ansetzen und Anfrieren des Kunststoffmaterials an die Außenwand der Staukammer. Die Ecken können aber auch in einer abgerundeten Ausführung ausgelegt werden. Diese Gestaltung bietet auch ein optimales Verhältnis zwischen der Wirkung der Staukammer auf die Strömung der Schmelze und dem Materialverlust im Anguss.

Da bei dünnwandigen Teilen ein hoher Spritzdruck mit schnellen Einspritzgeschwindigkeiten benötigt wird, wäre ein zu hoher DrucKverlust beispielsweise infolge der Scherkräfte ein großer Nachteil, da dann die Gefahr besteht, dass die Kavität nicht ausreichend schnell gefüllt wird und die Schmelze schon teilweise erstarrt, bevor die Form ganz gefüllt ist. Es würde ein noch höherer Druck benötigt, um den Druckverlust auszugleichen und die Form schnell komplett zu füllen, was aber wiederum die Scherkräfte erhöht und thermische Probleme hervorrufen kann.

Die Erfindung minimiert die Scherung und den Druckverlust für diese Art Schmelzleitsystemen.

Die Erfindung schafft außerdem ein In-Mold-Decoration (IMD)- oder In-Mold-Labeling (IML)-Spritzgieß-Verfahren zur Herstellung einer berührungssensitiven Anzeigenblende mit einem verbesserten Materialausbreitungsverhalten, Dazu ist erfindungsgemäß ein Verfahren mit den Merkmalen nach Anspruch 5 vorgesehen

Das erfindungsgemäße Verfahren und die Vorrichtung sind besonders vorteilhaft geeignet für die Herstellung von berührungsempfindlichen Anzeige-Bedienfeldern (Touch-Displays), insbesondere in Haushaltgeräten, beispielsweise Wäschepflegegeräten wie Wäschetrocknern und Waschmaschinen oder Waschtrockner. Die besonderen Vorteile in Bezug auf schonenden Materialfluss und der reduzierten Scherkräfte wirken sich besonders beim Hinterspritzen von mit Funktionsschichten wie Dekor-, Leiter, metallisierten Schichten, etc. versehenen Folien günstig aus Insbesondere wenn die Folien mit der Funktionsschicht zum Kunststoffmaterial hin hinterspritzt werden. Die Erfindung gewährleistet dann ein funktionssicheres Einspritzen ohne Gefahr der Beschädigung der Funktionsschicht. Das Hinterspritzen mit der Funktionsschicht zum Kunststoff hin gewährleistet andererseits einen dauerhaften störungsfreien Betrieb, da die Funktionsschicht nicht direkt der Berührung bei Betätigung ausgesetzt sein muss, sondern wiederum durch die Folie geschützt ist.

Weitere Merkmale und Vorteile der Erfindung ergeben sich auch aus den Unteransprüchen und der folgenden Beschreibung einer - Ausführungsform unter Bezugnahme auf die beigefügten Zeichnungen, in denen zeigt,
- Fig. 1.: einen schematischen Querschnitt durch einen Teil eines Spritzwerkzeugs mit eines erfindungsgemäßen Schmelzeleitsystems;
- Fig. 2.: einen vergrößerten Ausschnitt der Darstellung des Schmelzeleitsystems aus Fig. 1;
- Fig. 3.: eine Ansicht eines nach dem erfindungsgemäßen Verfahren hergestellten Bauteils mit einem Anguss; und
- Fig. 4.: ein Werkzeug und ein damit hergestelltes Bauteil nach dem Stand der Technik.

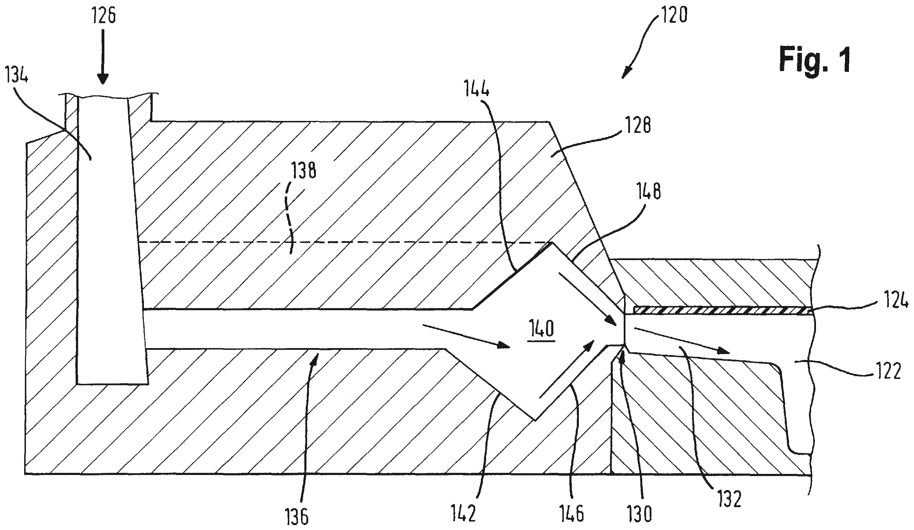

In der schematischen Schnittdarstellung in Figur 1 ist ein Teil eines Spritzgießwerkzeugs 120 mit einem Schmelzeleitsystem 128 zu sehen. Zur Veranschaulichung ist in Figur 3 außerdem ein entsprechendes, mit dem Werkzeug 120 hergestelltes Bauteil 110 mit Anguss 112 dargestellt.

Das Spritzgießwerkzeug 120 weist eine Kavität 122 auf, in die eine Folie 124 eingelegt ist. Die Folie 124 wird mit Kunststoffmaterial 126 hinterspritzt, so dass das in Figur 3 gezeigte Bauteil 110 in Form einer flachen Blende mit hinterspritzter Folie 124 entsteht. Wie der Schnitt A-A in Figur 3b durch das Bauteil 110 aus Figur 3a zeigt, ist die Folie 124 mit einer Schicht des Kunststoffmaterials 126 hinterspritzt, deren Dicke im Vergleich zur Dicke der Folie 124 größer ist. Am Rand des Bauteils 110 hingegen ist ein dünner Flansch 132 ausgebildet, der an der an einer Schmalseite des Bauteils 110 über einen langestreckten, dünnen Film- bzw. Bandanschnitt 133 mit dem Anguss 112 verbunden ist. In Figur 3a sind Bauteil 110 und Anguß 112 getrennt um den Querschnitt des Anschnitts 133 zu zeigen.

Das Schmelzeleitsystem 128 im Werkzeug 120 weist einen Angusskegel 134 und einen Angussverteiler 136 auf. Der Angussverteiler 136 ist als fächerförmig aufgespreizter Verteilkanal ausgebildet. Der Angussverteiler 136 weist an den Schenkeln zwei Hauptstromkanäle 138 in Form eines V auf, deren Durchströmquerschnitt gegenüber dem restlichen Fächer so aufgeweitet ist, dass die Hauptstromkanäle 138 einen größeren Tell des Materialflusses der Schmelze übernehmen. Dadurch ist der Schmelzfluss im Angussverteiler so ausbalanciert, dass sich eine Fließfront der Schmelze vorteilhafterweise gleichmäßig im Angussverteiler 136 ausbreitet.

Über eine Anbindung 130 ist das Schmelzeleitsystem 128 mit der Kavität 122 verbunden. Der Übergang zwischen der Anbindung 130 und der Kavität 122 bildet im fertigen Bauteil 110 den Anschnitt 133.

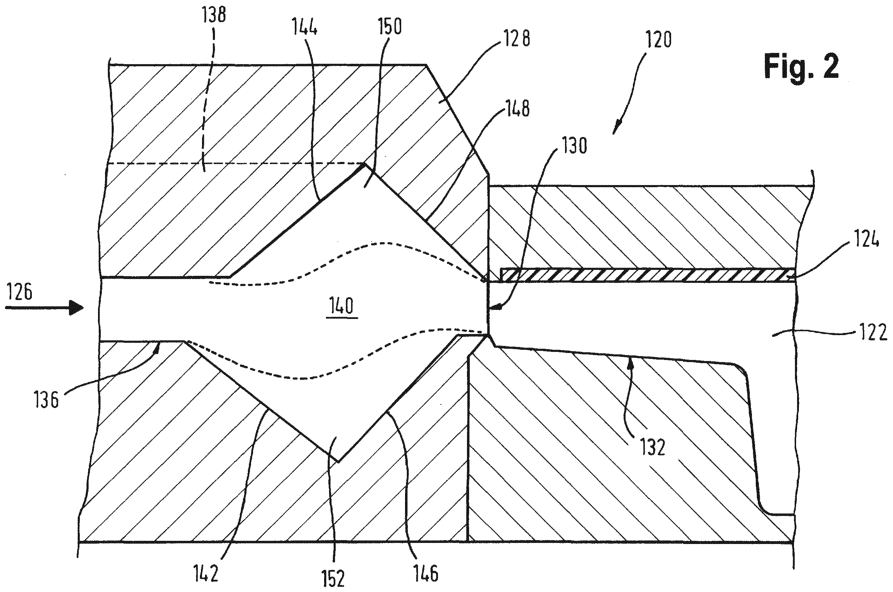

Zwischen der Anbindung 130 und dem Angussverteiler 136 ist eine Staukammer 140 vorgesehen. Die Staukammer 140 ist in der dargestellten Ausführungsform als parallel zur Anbindung 130 langestreckte Kammer ausgebildet. Die wesentliche Flussrichtung der Schmelze ist in Figur 1 schematisch durch die Pfeile angedeutet und erstreckt sich hauptsächlich in der Zeichnungsebene. Die Staukammer weist quer zur Fließrichtung der Schmelze, also in der Zeichnungsebene einen prismatischen, insbesondere im Wesentlichen rechteckigen Querschnitt auf wie aus Figur 1 deutlich wird. An einer ersten Längsseite 144 der prismatischen Staukammer 140 mundet der Angussverteiler 136. An der Kante einer gegenüberliegenden ersten Stauwand 146 mündet die Staukammer 140 wiederum über die Anbindung 130 in die Kavität 122. Zwischen der Stauwand 146 und der Längsseite 144 erstreckt sich benachbart zur Mündung der Anbindung 130 eine zweite Stauwand 148. Gegenüber der zweiten Stauwand 148 erstreckt sich eine zweite Längswand 142. Die Staukammer ist vorteilhafterweise in ihrem Querschnitt asymmetrisch aufgebaut. Das heißt die aneinandergrenzenden Wände sind unterschiedlich breit, so dass der Querschnitt kein Quadrat oder eine Raute bildet, sondern im Wesentlichen ein Rechteck oder ein unregelmäßiges Viereck. Dies hat ein vorteilhaftes Fließverhalten des Schmelzstromes in der Staukammer, insbesondere aber auch darüber hinaus hinter der Anbindung 130 in der Kavität 122 zur Folge, wie in der Figur 2 verdeutlicht ist.

In Figur 2 ist in einer vergrößerten Detailansicht die Staukammer 140 mit dem Übergang von der Anbindung 130 zur Kavität 122 gezeigt. In der Detailansicht in Figur 2 ist weiterhin schematisch der angenommene Fluss des Schmelzstromes dargestellt.

Der Schmelzstrom fließt von dem Verteilkanal 136 durch die Staukammer 140, über die Anbindung 130 in die Kavität 122, um den Raum hinter der Folie 124 auszufüllen. Die Aufweitung des Strömungsquerschnittes in der Staukammer 140 führt zu einer Verlangsamung des Schmelzstromes in diesem Bereich. In den Randbereichen 150, 152 der Staukammer 140 setzt sich das Kunststoffmaterial an die Außenwand an und bildet in diesen Bereichen Erstarrungszonen.

Durch die Gestaltung der Staukammer 140, insbesondere durch den asymmetrischen Querschnitt der Staukammer 140 wird erreicht, dass die zu hinterspritzende Folie durch die Fließfront des Schmelzstroms indirekt angespritzt wird. Dies ist für auf der Folie befindliche Funktionsschichten, Dekorschichten, Haftvermittler, etc. besonders schonend.

In Figur 2 ist gut zu sehen, dass der Schmelzstrom wegen des asymmetrischen Versatzes der Längsseiten 142, 144 und der Stauwände 146, 148 umgelenkt wird. Damit wird besonders vorteilhaft eine verbesserte indirekte Anspritzung der Folie und damit eine noch weitergehende Schonung erreicht.

Vorteilhaft kann auch eine Oberflächengestaltung in der Staukammer 140, insbesondere eine oder beide der Stauwände 146, 148 optional mit eine oder beiden Längseiten 142, 144 vorgesehen sein, um den Schmelzstrom zu vergleichmäßigen und eine verbesserte Strömung im Schmelzleitsystem zu erreichen. Beispielsweise können die genannten Oberflächen mit einer Erodierstruktur versehen sein. Eine solchermaßen aufgerauhte Oberfläche kann verhindern, dass bereits erkaltete Kunststoffschichten durch die Scherkräfte abgelöst und in die Kavität 122 eingespült werden,

## Patentansprüche

1. Schmelzeleitsystem (128) für In-Mold-Decoration (IMD)- oder In-Mold-Labeling (IML)-Verfahren zum Hinterspritzen von mit Funktionsschichten versehenen Folien in flachen Kunststoffteilen (110), mit wenigstens einer Band- oder Filmanbindung (130) und einem Angussverteiler (136), **dadurch gekennzeichnet, daß** das Schmelzeleitsystem zwischen der Anbindung (130) und dem Angussverteiler (136) eine Staukammer (140) mit einem gegenüber dem Angussverteiler (136) quer zur Fließrichtung des Spritzmaterials erweiterten, asymmetrischen Querschnitt aufweist.

2. Schmelzeleitsystem (128) nach Anspruch 1, bei dem die Staukammer (140) quer zur Fließrichtung der Schmelze einen im Wesentlichen prismatischen, insbesondere rechteckigen Querschnitt aufweist.

3. Schmelzeleitsystem (128) nach Anspruch 1 oder 2, bei dem die Staukammer (140) assymetrisch versetzte Stauwände (146, 148) aufweist, zwischen denen die Staukammer 140 in die Anbindung mündet, wobei die Stauwände 146, 148 den Schmelzstrom in der Staukammer 140 umlenken.

4. Schmelzeleitsystem (128) nach einem der vorhergehenden Ansprüche, bei dem der Angussverteiler (136) einen Fächer bildet, dessen gespreiztes Ende in die Staukammer (140) mündet.

5. In-Mold-Decoration (IMD)- oder In-Mold-Labeling (IML)-Spritzgieß-Verfahren zur Herstellung einer berührungssensitiven Anzeigenblende, , bei dem
- eine in einer Kavität (122) eines Spritzgießwerkzeugs (120) eingelegte Folie (124) mit Kunststoffmaterial hinterspritzt wird
- wobei der Schmelzstrom in eine Kavität (122) gleitet wird, um einen Raum hinter der Folie (124) auszufüllen,
- **dadurch gekennzeichnet, daß** der Schmelzstrom von einem Verteilkanal (136) über eine Anbindung (130) durch eine Staukammer (140) fließt und durch einen gegenüber dem Querschnitt des Angussverteilers (136) quer zur Fließrichtung des Spritzmaterials asymmetrischen, erweiterten Strömungsquerschnitt der Staukammer (140) die zu hinterspritzende Folie durch die Fließfront des Schmelzstroms indirekt angespritzt wird.

6. Verfahren nach Anspruch 5, bei dem der Schmelzstrom durch einen asymmetrischen Versatz von Längsseiten (142, 144) und Stauwänden (146, 148) der Staukammer (140) umgelenkt wird.

7. Verfahren nach einem der Ansprüche 5 bis 6, zur Herstellung einer Anzeigenblende für Haushaltsgeräte.

## Claims

1. Melt conducting system (128) for in-mould decoration (IMD) or in-mould labelling (IML) processes for back injection of films in flat plastic parts (110) provided with functional layers, with at least one strip or film linkage (130) and a runner (136), **characterised in that** the melt conducting system has an accumulation chamber (140) between the linkage (130) and the runner (136), with an asymmetrical cross-section that is wider than the runner (136) perpendicular to the flow direction of the injected material.

2. Melt conducting system (128) according to claim 1, wherein the accumulation chamber (140) has an essentially prismatic, in particular rectangular, cross-section perpendicular to the flow direction of the melt.

3. Melt conducting system (128) according to claim 1 or 2, wherein the accumulation chamber (140) has asymmetrically offset barrier walls (146, 148), between which the accumulation chamber 140 opens into the linkage, wherein the barrier walls 146, 148 deflect the melt stream in the accumulation chamber 140.

4. Melt conducting system (128) according to one of the preceding claims, wherein the runner (136) forms a fan, the spread end of which opens into the accumulation chamber (140).

5. In-mould decoration (IMD) or in-mould labelling (IML) injection moulding process for producing a touch-sensitive display panel, wherein
- a film (124) inserted into a cavity (122) of an injection moulding tool (120) is back-injected with plastic material,
- wherein the melt stream is conducted into a cavity (122), in order to fill out a space behind the film (124),
- **characterised in that** the melt stream flows from a distribution channel (136), via a linkage (130), through an accumulation chamber (140), and the film to be back-injected is injected indirectly by the flow front of the melt stream through an asymmetrical flow cross-section that is wider than the cross-section of the runner (136) perpendicular to the flow direction of the injected material.

6. Process according to claim 5, in which the melt stream is deflected by an asymmetrical offset of longitudinal faces (142, 144) and barrier walls (146, 148) of the accumulation chamber (140).

7. Process according to one of claims 5 to 6, for producing a display panel for household appliances.

## Revendications

1. Système de guidage de matière fondue (128) pour procédé de décoration dans le moule (IMD) ou de marquage dans le moule (IML) pour l'injection par l'arrière de films munis de couches fonctionnelles en pièces plastiques plates (110), comprenant au moins un raccordement de bande ou de film (130) et un canal d'alimentation (136), **caractérisé en ce que** le système de guidage de matière fondue présente entre le raccordement (130) et le canal d'alimentation (136) une chambre d'accumulation (140) ayant une section transversale asymétrique, élargie transversalement au sens d'écoulement de la matière injectée, par rapport au canal d'alimentation (136).

2. Système de guidage de matière fondue (128) selon la revendication 1, dans lequel la chambre d'accumulation (140) présente une section transversale essentiellement prismatique, notamment rectangulaire, transversalement au sens d'écoulement de la matière fondue.

3. Système de guidage de matière fondue (128) selon la revendication 1 ou 2, dans lequel la chambre d'accumulation (140) présente des parois d'accumulation (146, 148) asymétriquement décalées, entre lesquelles la chambre d'accumulation (140) débouche dans le raccordement, les parois d'accumulation (146, 148) déviant le flux de matière fondue dans la chambre d'accumulation (140).

4. Système de guidage de matière fondue (128) selon l'une quelconque des revendications précédentes, dans lequel le canal d'alimentation (136) forme un éventail dont l'extrémité écartée débouche dans la chambre d'accumulation (140).

5. Procédé de moulage par injection pour décoration dans le moule (IMD) ou marquage dans le moule (IML), destiné à la fabrication d'un bandeau d'affichage tactile, dans lequel
- un film inséré dans une cavité (122) d'un moule d'injection (120) est injecté par l'arrière avec de la matière plastique,
- le flux de matière fondue étant glissé dans une cavité (122) afin de remplir un espace derrière le film (124),
- **caractérisé en ce que** le flux de matière fondue coule depuis un canal d'alimentation (136) à travers une chambre d'accumulation (140) par l'intermédiaire d'un raccordement (130), et **en ce qu'**à travers une section transversale d'écoulement de la chambre d'accumulation (140), élargie, asymétrique transversalement au sens d'écoulement de la matière injectée, par rapport à la section transversale du canal d'alimentation (136), le film à injecter par l'arrière est injecté indirectement par le front d'écoulement du flux de matière fondue.

6. Procédé selon la revendication 5, dans lequel le flux de matière fondue est dévié en raison d'un décalage asymétrique de grands côtés (142, 144) et de parois d'accumulation (146, 148) de la chambre d'accumulation (140).

7. Procédé selon l'une quelconque des revendications 5 à 6, destiné à la fabrication d'un bandeau d'affichage pour appareils ménagers.
